## Europäisches Patentamt
## European Patent Office
## Office européen des brevets

(19)

(11) Veröffentlichungsnummer: **0 187 267**
**B1**

(12) # EUROPÄISCHE PATENTSCHRIFT

(45) Veröffentlichungstag der Patentschrift:
26.10.88

(51) Int. Cl.⁴: **A 61 C 13/20**

(21) Anmeldenummer: **85115424.5**

(22) Anmeldetag: **05.12.85**

(54) Modellsatz zur Herstellung einer Kupplung für eine feste Verbindung zwischen Metallteilen im Dentalbereich.

(30) Priorität: **08.12.84 DE 3444854**

(43) Veröffentlichungstag der Anmeldung:
**16.07.86 Patentblatt 86/29**

(45) Bekanntmachung des Hinweises auf die Patenterteilung:
**26.10.88 Patentblatt 88/43**

(84) Benannte Vertragsstaaten:
**AT CH GB LI LU**

(56) Entgegenhaltungen:
**WO - A - 85/01872**
**DE - A - 3 010 107**
**FR - A - 722 845**
**US - A - 1 645 436**

**ZWR DAS DEUTSCHE ZAHNÄRTZTEBLATT, Band 93, Nr. 2, Februar 1984, Seite 152, Bühl, Baden, CH; "Arbeitsmittel und Werkstoffe: DIN-Taschenbuch 169: Normen über Sterilisation, Desinfektion und Sterilgutversorgung"**

(73) Patentinhaber: **Schaar geb. Sobotta, Verena, Am Hang 1, D-5901 Wilnsdorf 3 (DE)**

(72) Erfinder: **Schaar, Manfred, Am Hang 1, D-5901 Wilnsdorf 3 (DE)**

(74) Vertreter: **Pürckhauer, Rolf, Friedrich-Ebert-Strasse 27 Postfach 10 09 28, D-5900 Siegen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Modellsatz der im Oberbegriff des Patentanspruches 1 angegebenen Gattung.

Mit einem beispielsweise aus der DE-A-34 32 486 bekannten Modellsatz der gattungsgemässen Art können Teile im Dentalbereich, nämlich Kronen, Geschiebe oder ähnliche Teile, ohne Löten an Modellgussbasen befestigt werden. Eine solche Kupplung besteht aus drei Teilen: einer Patrize, einer Matrize und einem Platzhalterteil, der den notwendigen Abstand gewährleistet. Alle drei Teile haben kegelförmige Passteile, wobei die Patrize in einen Hohlkegel der Matrize nach Einfüllen von Füllmaterial eingedrückt wird. Damit das Füllmaterial in den gesamten Zwischenraum zwischen Matrize und Patrize verdrängt wird, ist ein gewisser Druck aufzubringen, was zu unerwünschten Positonsveränderungen führen kann. Mit solchen Modellsätzen können Klebeverbindungen anstelle der von jeher problematischen Lötverbindungen angewandt werden. Klebeverbindungen sind auch in «dentallabor» 1984, Heft 9, Seiten 983–986 beschrieben.

Der Erfindung liegt die Aufgabe zugrunde, einen Modellsatz zur Herstellung einer Kupplung der eingangs genannten Gattung zu schaffen, deren Teile völlig drucklos zusammengefügt und im statischen Ruhezustand miteinander vergossen werden können, wobei kein Platzhalter benötigt wird und der Modellsatz also aus lediglich zwei Formteilen besteht.

Diese Aufgabe wird erfindungsgemäss durch die Kennzeichnungsmerkmale des Patentanspruchs 1 gelöst. Zweckmässige weitere Ausgestaltungen des erfindungsgemässen Modellsatzes sind den Unteransprüchen zu entnehmen.

Die Erfindung ermöglicht beliebige Arbeitsfolgen: Man kann einmal zunächst die Krone herstellen und dann dublieren, oder man kann erst dublieren und dann die Krone herstellen, was einen Vorteil bedeutet. Das heisst also, dass man erst die Innenkrone und dann die Modellgussbasis mit der Patrize und anschliessend die Doppelkrone mit der Matrize fertigen kann. Ma kann auch erst die Innenkrone, dann die Aussenkrone mit der Matrize und anschliessend die Modellgussbasis mit der Patrize herstellen. Positionsveränderungen werden bei dem völlig drucklosen Zusammenfügen der Teile vermieden.

In der Zeichnung ist ein Ausführungsbeispiel des erfindungsgemässen Modellsatzes dargestellt. Dabei zeigt

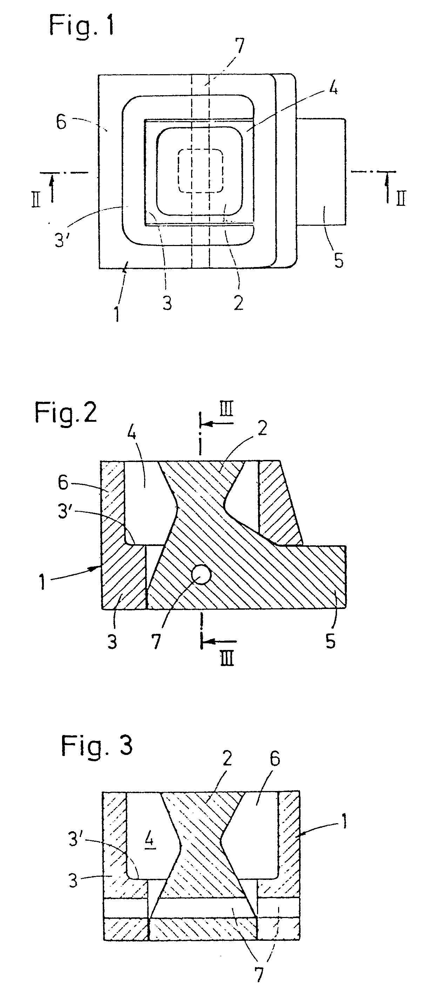

Fig. 1 eine Draufsicht,

Fig. 2 einen Schnitt nach der Linie II–II in Fig. 1 und

Fig. 3 einen Schnitt nach der Linie III–III in Fig. 2.

Der dargestellte Modellsatz für eine Kupplung besteht aus einer Matrize 1 und einer Patrize 2. Die Matrize 1 ist kastenförmig ausgebildet und umgibt bei zusammengesetzter Kupplung die Patrize 2 im Bereich eines Basisteils 3 mit Schiebesitz und oberhalb einer Abstufung 3' mit einem Hohlraum 4 dazwischen. Die Patrize 2 ist in ihrem oberen Teil diaboloförmig eingeschnürt und mit abgerundetem Rechteckquerschnitt ausgebildet. Sie weist im unteren Teil einen Ansatz 5 auf, der aus der kastenförmigen Matrize 1 seitlich herausragt. Die Matrize 1 wird mit ihrer Rückwand 6 an einer nicht dargestellten Krone befestigt, während der Ansatz 5 der Patrize 2 mit einem Prothesen- bzw. Modellgussgerüst (nicht dargestellt) verbunden wird und auch die Einschubbewegung der Patrize 2 in die Matrize 1 begrenzt.

Zur zusätzlichen vorübergehenden Fixierung von Matrize 1 und Patrize 2 können beide im Bereich des Basisteils 3 durchgehende Bohrungen 7 zur Aufnahme eines Fixierstiftes (nicht dargestellt) aufweisen.

Durch den diaboloförmig eingeschnürten Teil der Patrize 2 ist eine formschlüssige Verbindung von Matrize 1 und Patrize 2 gewährleistet, und durch die Schiebepassung am Basisteil 3 ist ein Zusammenfügen ohne Druckanwendung durch Einbringen von Füllmaterial in den Hohlraum 4 im statischen Ruhezustand möglich und ein Platzhalter erübrigt sich.

## Patentansprüche

1. Modellsatz zur Herstellung einer Kupplung für eine feste Verbindung zwischen Metallteilen im Dentalbereich, mit einer dem einen Metallteil zugeordneten Patrize (2) und einer dem anderen Metallteil zugeordneten Matrize (1) aus rückstandslos verbrennbarem Material als Gussmodelle für die Kupplungsteile, die nach dem Guss mit einem entsprechenden aushärtbaren Verblockungsmaterial formschlüssig miteinander verbindbar sind, wobei die Patrize diaboloartig eingeschnürt ausgebildet ist und einen seitlich aus der Matrize herausragenden Ansatz (5) zur Verbindung mit einem Zahnprothesen- bzw. Modellgerüst aufweist, und wobei die Matrize so geformt ist, dass sie die Patrize mit durch das Verblockungsmaterial auszufüllendem Abstand umgibt, dadurch gekennzeichnet, dass die Matrize (1) kastenförmig mit rechteckigen Wandungen und nach oben und unten offen ausgebildet ist und dass zwischen einem oberen, den diaboloartig eingeschnürten Teil der Patrize (2) mit dem genannten Abstand aufnehmenden Teilstück der Matrize (1) und einem den unteren Teil der Patrize (2) mit Schiebesitz aufnehmenden Basisteil (3) der Matrize (1) eine nach innen ragende Abstufung (3') an der Matrize (1) vorgesehen ist.

2. Modellsatz nach Anspruch 1, dadurch gekennzeichnet, dass der aus der Matrize (1) im Bereich des Basisteils (3) derselben herausragende Ansatz (5) der Patrize (2) die Einschubbewegung derselben in die Matrize (1) begrenzt.

3. Modellsatz nach Anspruch 1 oder 2, dadurch gekennzeichnet, dass die Patrize (2) und die Matrize (1) im unteren Bereich miteinander fluchtende Bohrungen (7) zur Aufnahme eines Fixierstiftes aufweisen.

## Revendications

1. Ensemble formant moule, destiné à la fabrication d'une jonction pour obtenir une liaison rigide entre des pièces métalliques dans le domaine dentaire, comprenant un poinçon (2) associé à l'une des pièces métalliques et une matrice (1) associée à l'autre pièce métallique, en un matériau susceptible de se carboniser sans laisser de résidu et servant de moule de coulée pour les pièces de la jonction qui, après la coulée, peuvent être reliées l'une à l'autre par complémentarité de forme par un matériau de blocage adéquat susceptible de durcir, le poinçon étant constitué avec un étranglement en forme de diabolo et comportant un prolongement (5) faisant saillie latéralement de la matrice et destiné à être relié à une infrastructure de prothèse dentaire ou de moule et la matrice étant conformée de manière à entourer le poinçon à un certain intervalle qui doit être empli du matériau de blocage, caractérisé en ce que la matrice (1) est en forme de caisson à paroi rectangulaire, et est ouverte vers le haut er vers le bas et en ce que entre une partie supérieure de la matrice (1), recevant avec ledit intervalle la partie du poinçon (2) qui est étranglée en forme de diabolo, et une partie de base (3) de la matrice (1), recevant à ajustement coulisssant la partie inférieure du poinçon (2), il est prévu sur la matrice (1) un épaulement (3') faisant saillie vers l'intérieur.

2. Ensemble formant moule suivant la revendication 1, caractérisé en ce que le prolongement (5) du poinçon (2), qui fait saillie de la matrice (1) dans la région de la partie de base (3) de celle-ci, délimite le mouvement d'introduction du poinçon (2) dans la matrice (1).

3. Ensemble formant moule suivant la revendication 1 ou 2, caractérisé en ce que le poinçon (2) et la matrice (1) comportent dans la partie inférieure des perçages (7) alignés et destinés à recevoir une broche de fixation.

## Claims

1. Mould set for making a coupling for a firm connection between metal parts in dentistry, with a core (2) associated with the one metal part and a matrix (1), associated with the other metal part, of material combustible without residue, as casting mould for the coupling parts, which after the castin can be connected together in interlocking manner with a suitable hardenable interlocking material, wherein the core is necked in diabolo form and comprises a projection (5) projecting laterally out of the matrix for connection to a dental prothesis or casting frame, and wherein the matrix is so formed that it surrounds the core with a spacing to be filled by the interlocking material, characterized in that the matrix (1) is of box form with rectangular walls open above and below and in that an inwardly projecting step (3') on the matrix (1) is provided between an upper portion of the matrix (1) receiving the diaboloformed, necked in part of the core (2) and a base part (3) of the matrix (1) receiving the lower part of the core (2) with disc seating.

2. Mould set according to claim 1, characterized in that the projection (5) of the core (2) projecting out of the matrix (1) in the region of the base part (3) of the same delimits the insertion of the core into the matrix (1).

3. Mould set according to claim 1 or 2, characterized in that the core (2) and the matrix (1) have aligned bores (7) in the lower region for receiving a fixing rod.

## Fig. 1

## Fig. 2

## Fig. 3